(19) Europäisches Patentamt
European Patent Office
Office européen des brevets

(11) Publication number: **0 150 529**
**A2**

# (12) EUROPEAN PATENT APPLICATION

(21) Application number: **84201824.4**

(22) Date of filing: **10.12.84**

(51) Int. Cl.⁴: **A 01 N 47/12**
// (A01N47/12, 37:22)

(30) Priority: **12.12.83 US 560646**

(43) Date of publication of application: **07.08.85**
**Bulletin 85/32**

(84) Designated Contracting States: **AT BE CH DE FR GB IT LI NL SE**

(71) Applicant: **STAUFFER CHEMICAL COMPANY, Westport Connecticut 06880 (US)**

(72) Inventor: **Ochomogo, Oscar Rene, 1124 Hermina Street, Milpitas California 95035 (US)**
Inventor: **Deuber, Robert, 13100 Campinas, Estado de Sao Paulo (BR)**

(74) Representative: **Urbanus, Henricus Maria, Ir. et al, c/o Vereenigde Octrooibureaux Nieuwe Parklaan 107, NL-2587 BP 's-Gravenhage (NL)**

## (54) Synergistic herbicidal compositions.

(57) Synergistic herbicide combinations comprising: (a) an herbicidally effective amount of a thiolcarbamate having the formula

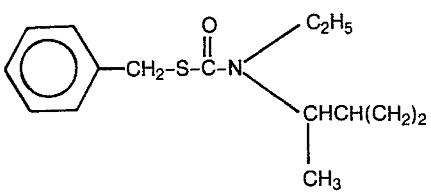

and (b) an herbicidally effective amount of an anilide having the formula

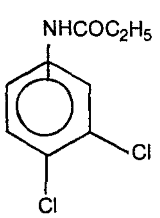

EP 0 150 529 A2

# SYNERGISTIC HERBICIDAL COMPOSITIONS

## Background of the Invention

The protection of crops from weeds and other vegetation which inhibit crop growth by consuming valuable acreage or soil nutrients is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In many cases, active herbicides have been shown to be more effective in combination than when applied individually. The result is often termed "synergism," since the combination demonstrates a potency or activity level exceeding that which might be expected from a mere addition of the individual potencies of the components.

The present invention resides in the discovery that two classes of compounds already known individually for their herbicidal potency display this synergistic effect when applied in combination.

## Prior Art

The two classes of herbicides forming the combination which is the subject of the present invention are both known in the art of chemical herbicides for their activity independent of each other.

One such compound is 3',4'-dichlorophenylpropionanilide, commonly known as propanil. This chemical is a known herbicide and is sold by the Rohm and Haas Company, the Vertac Chemical Corporation, as well as Bayer AG, under various names. As a single compound, propanil is stated to be effective for post-emergence application against bardyardgrass and various other weeds in rice.

The second of the two compounds is S-benzyl ethyl-1,2-dimethylpropyl thiocarbamate. This compound is manufactured and sold by the Stauffer Chemical Company, Westport, Connecticut.

## Description of the Invention

It has now been discovered that synergistic activity is exhibited by a combination of two herbicides, one of which is of the thiolcarbamate type, and the other of which is of the anilide type. In particular this invention relates to a novel synergistic herbicidal composition comprising

(a) an herbicidally effective amount of a thiolcarbamate having the formula

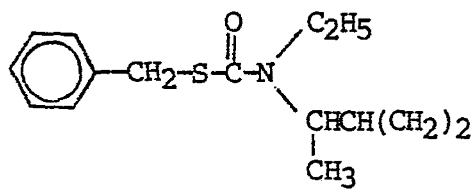

, and

(b) an herbicidally effective amount of an anilide having the formula

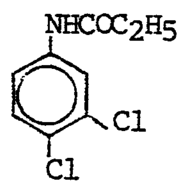

As used herein, the terms "synergism" and "synergistic activity" means herbicidal activity for the combination which is greater than the herbicidal activity which would be expected for either of the herbicides used in the combination when used separately, or which definition is generally accepted by those skilled in the art.

The term "herbicide", as used herein, means a compound or composition which controls or modifies the growth of plants. By the term "herbicidally effective amount" is meant any amount of such compound or composition which causes a modifying effect upon the growth of plants. By "plants" is meant germinant seeds, emerging seedlings and established vegetation, including roots and above-ground portions. Such controlling or modifying effects include all deviations from natural development, such as killing, retardation, defoliation, desiccation, regulation, stunting, tillering, leaf burn, dwarfing and the like.

This invention further relates to a method of controlling undesirable vegetation comprising applying the above composition to the locus where control is desired.

The thiolcarbamates within the scope of the present invention can be prepared by the processes described in U.S. Patent No. 2,992,091 and 3,207,775.

The anilide compounds used in the synergistic combinations of the invention can be purchased from the previously indicated manufacturers.

In the compositions of this invention, the (thiolcarbamate): (anilide) weight ratio preferably ranges from about 1 to 3 to about 2 to 3.

Herbicidal compositions illustrative of those embodied in the instant application were prepared and evaluated for synergistic herbicidal effect. The results are shown in the following examples.

EXAMPLES

A postemergence test was performed in a simulated field as follows:

A series of plots, 2 meters x 10 meters was prepared and planted with drill seeded, upland, rainfed rice and also a number of weed species prevalent in rice. These weeds were as follows;

| Grassy weeds | Abbr. | Broadleaf Weeds | Abbr. |
|---|---|---|---|
| Cencrus echinatus | (CEEC) | Acanthospermum hispidum | (ACHI) |
| Digitaria sanguinalis | (DISA) | Amaranthus spp. | (AMSP) |
| Eleusine indicia | (ELIN) | Portulaca oleracea | (POOL) |
| | | Sida rhombifolia | (SIRH) |

Applications of the treatments with the compounds set forth in Table I below were made postemergence to rice and weeds approximately three weeks after planting. The applications were made by tractor drawn sprayer using water as a carrier at the rate of 200 liters per hectare.

Phytotoxicy and efficacy ratings were made visually 7 and 40 days after treatment, respectively, and the results are expressed as mean percent control of these weed species in treated plots compared to with those in untreated control plots.

The results of these tests are listed in Table I in the columns headed by the symbol "O" (indicating the "observed" results). These results were then compared with the expected results, shown in the columns headed by the symbol "E", derived from Limpel's formula (Limpel et al., "Weed Control by Dimethylchloroterephthalate Alone and in Certain Combinations", PROC. NEWCC., Vol. 16, pp. 48-53 (1962):

$$E = X + Y - \frac{XY}{100}$$

wherein X = observed percent injury when one of the herbicides is used alone, and

Y = observed percent injury when the other herbicide is used alone.

A single asterisk (*) is used to indicate the tests where the results show synergism, i.e., where the observed result exceeds the expected result.

TABLE I

HERBICIDE SYNERGISM TEST RESULTS

TEST COMPOUNDS:

A : 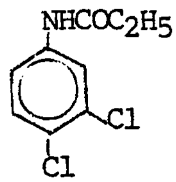

B : 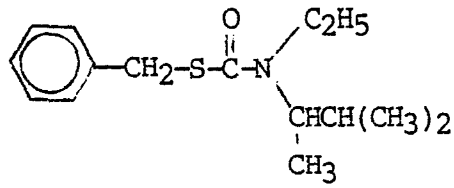

A = 3',4'-dichlorophenyl-propionanilide

B = S-benzyl ethyl-1,2-dimethylpropyl thiolcarbamate

Postemergence Application; Average of Two Replications

| Appln. Rates (lb/A) | | Percent Control - O = Observed E = Expected | | | | | | | | | | | | | |
|---|---|---|---|---|---|---|---|---|---|---|---|---|---|---|---|
| | | CEEC | | DISA | | ELIN | | ACHI | | AMSP | | POOL | | SIRH | |
| A | B | E | O | E | O | E | O | E | O | E | O | E | O | E | O |
| 7 days after treatment | | | | | | | | | | | | | | | |
| | 1.0 | - | 28 | - | 0 | - | 52 | - | 0 | - | 0 | - | 0 | - | 0 |
| | 1.5 | - | 20 | - | 0 | - | 46 | - | 0 | - | 0 | - | 0 | - | 13 |
| | 2.0 | - | 24 | - | 0 | - | 42 | - | 0 | - | 0 | - | 18 | - | 81 |
| 3.0 | | - | 77 | - | 94 | - | 97 | - | 52 | - | 95 | - | 72 | - | 0 |
| 3.0 | 1.0 | 84 | 87* | 94 | 97* | 99 | 100* | 52 | 39 | 95 | 99* | 72 | 100* | 0 | 0 |
| 3.0 | 1.5 | 82 | 90* | 94 | 100* | 98 | 100* | 52 | 70* | 95 | 99* | 72 | 100* | 13 | 0 |
| 3.0 | 2.0 | 83 | 88* | 94 | 99* | 98 | 99* | 52 | 54* | 95 | 100* | 77 | 100* | 81 | 52 |
| 40 days after treatment | | | | | | | | | | | | | | | |
| | 1.0 | - | 15 | - | 0 | - | 25 | - | 0 | - | 0 | - | 0 | - | 0 |
| | 1.5 | - | 15 | - | 5 | - | 37 | - | 0 | - | 0 | - | 0 | - | 0 |
| | 2.0 | - | 20 | - | 31 | - | 22 | - | 0 | - | 19 | - | 14 | - | 58 |
| 3.0 | | - | 41 | - | 78 | - | 57 | - | 14 | - | 62 | - | 100 | - | 0 |
| 3.0 | 1.0 | 50 | 36 | 78 | 83* | 68 | 87* | 14 | 0 | 62 | 89* | 100 | 100 | 0 | 0 |
| 3.0 | 1.5 | 50 | 30 | 79 | 81* | 73 | 91* | 14 | 37* | 62 | 84* | 100 | 71 | 0 | 0 |
| 3.0 | 2.0 | 53 | 47 | 85 | 86* | 66 | 89* | 14 | 0 | 69 | 70* | 100 | 100 | 58 | 42 |

* - Asterisk denotes synergistic affect shown.

"E" - Calculations for combinations based on percent control by each herbicide alone at appropriate rates.

"A" - Propanil emulsifiable concentrate containign 360 g active ingredient per liter.

"B" - S-benzyl ethyl-1,2-dimethylpropyl thiolcarbamte containing 720 g active ingredient per liter.

## METHODS OF APPLICATION

The synergistic herbicidal compositions of the present invention are useful in controlling the growth of undesirable vegetation by pre-emergence or post-emergence application to the locus where control is desired, including pre-plant, soil surface and post-emergence applications. The compositions are generally embodied in formulations suitable for convenient application. Typical formulations contain additional ingredients which are either inert or active. Examples of such ingredients are water, organic solvents, dust carriers, granular carriers, surface active agents, oil and water, wateroil emulsions, wetting agents, dispersing agents, and emulsifying agents. The herbicidal formulations of the present invention generally take the form of dusts, emulsifiable concentrates.

### EMULSIFIABLE CONCENTRATES

Emulsifiable concentrates are usually solutions of the active materials in nonwater-miscible solvents together with an emulsifying agent. Prior to use, the concentrate is diluted with water to form a suspended emulsion of solvent droplets.

Typical solvents for use in emulsifiable concentrates include weed oils, chlorinated hydrocarbons, and nonwater-miscible ethers, esters, and ketones.

Typical emulsifying agents are anionic or nonionic surfactants, or mixtures of the two. Examples include long-chain alkyl or mercaptan polyethoxy alcohols, alkylaryl polyethoxy alcohols, sorbitan fatty acid esters, polyoxyethylene ethers with sorbitan fatty acid esters, polyoxyethylene glycol esters with fatty or rosin acids, fatty alkylol amide condensates, calcium and amine salts of fatty alcohol sulfates, oil soluble petroleum sulfonates, or preferably mixtures of these emulsifying agents. Such emulsifying agents will comprise from about 1 to 10 weight percent of the total composition.

Thus, emulsifiable concentrates of the present invention will consist of from about 15 to about 50 weight percent active material, about 40 to 82 weight percent solvent, and about 1 to 10 weight percent

emulsifier. Other additives such as spreading agents and stickers can also be included.

IN GENERAL

Each of the above formulations can be prepared as a package containing the herbicide composition together with the other ingredients of the formulation (diluents, emulsifiers, surfactants, etc.). The formulations can also be prepared by a tank mix method, in which the ingredients are obtained separately and combined at the grower site..

In general, any conventional method of application can be used. The locus of application can be soil, seeds, seedlings, or the actual plants, as well as flooded fields. Soil application is preferred. The liquid compositions can be applied by the use of boom and hand sprayers. The compositions can also be applied from airplanes as sprays because they are effective in very low dosages. In order to modify or control the growth of emerged weed seedlings, as a typical example, the liquid compositions are applied to the seedling plants after they have emerged.

The amount of the present composition which constitutes a herbicidally effective amount depends upon the nature of the weed seedlings or plants to be controlled. The rate of application of active ingredient varies from about 0.01 to about 50 pounds per acre, preferably about 0.1 to about 25 pounds per acre with the actual amount depending on the overall cost and the desired results. It will be readily apparent to one skilled in the art that compositions exhibiting lower herbicidal activity will require a higher dosage than more active compounds for the same degree of control.

WHAT IS CLAIMED IS:

1. A synergistic herbicidal composition comprising

(a) an herbicidally effective amount of a thiolcarbamate having the formula

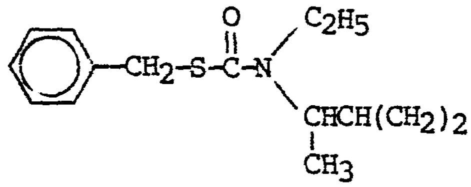

, and

(b) an herbicidally effective amount of an anilide having the formula

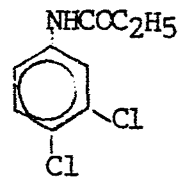

.

2. The composition of Claim 1 wherein the weight ratio of (a) to (b) ranges from about 1:3 to about 2:3.

3. A method of controlling undesirable vegetation which comprises applying to the locus where control is desired a herbicidally effective amount of a synergistic composition comprising a mixture of

(a) an herbicidally effective amount of a thiolcarbamate having the formula

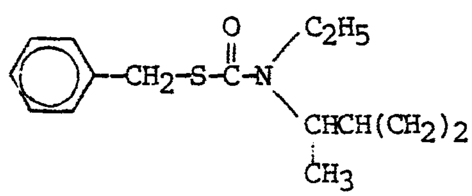

, and

(b) an herbicidally effective amount of an anilide having the formula

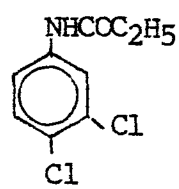

.

4. The method of Claim 3 wherein the weight ratio of (a) to (b) ranges from about 1:3 to about 2:3.

5. A synergistic herbicidal composition comprising:

(a) an herbicidally effective amount of a thiolcarbamate having the formula

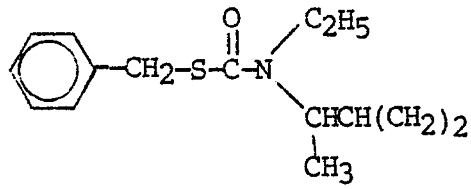

(b) an herbicidally effective amount of an anilide having the formula

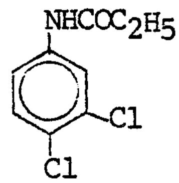

; and

(c) an inert diluent carrier.

6. The composition of Claim 5 wherein the ratio of (a) to (b) ranges from about 1:3 to about 2:3.